# EUROPEAN PATENT APPLICATION

(11) **EP 2 288 184 A1**
(43) Date of publication of application: **23.02.2011**
(21) Application number: 09165907.8
(22) Date of filing: 20.07.2009
(51) Int. Cl.: H04R 29/00, G01H 7/00, G10K 15/04, H04R 7/00

(54) **Acoustic energy generation**

(71) Applicant: NXP B.V., 5656 AG Eindhoven (NL)
(72) Inventor: Fischer, Balthasar, Redhill, Surrey RH1 1DL (GB); Tauer, Johannes, Redhill, Surrey RH1 1DL (GB); Kofler, Heinrich, Redhill, Surrey RH1 1DL (GB)
(74) Representative: Williamson, Paul Lewis

(57) **Abstract**

A method includes generating a laser pulse and focussing the laser pulse onto a spot to break down gas at the focal spot to generate an acoustic pulse. This acoustic pulse is then used as a sound source for measurements, the measurements may be measurements of a microphone or loudspeaker membrane or the impulse response of a room.

## Description

The invention relates to a method and apparatus for generating acoustic energy for room acoustic measurements or for sound device testing.

For room acoustic measurements or electroacoustic device measurements, in particular the impulse response or the transfer function of a loudspeaker or microphone, a sound needs to be provided to be measured. For example, US 2009-010443 describes the measurement of room acoustic properties, as does EP 2 045 620. A number of techniques may be used to calculate the impulse response from the sound measurements from the known signal used to create the sound.

A conventional way of generating sound in such prior approaches is to use a loudspeaker. An alternative is proposed by US2008-078249 which relates to ultrasound testing. In this case, the ultrasound is generated by electrically generating a plasma using a probe. However, this approach generates the plasma, and hence sound, at a gap between two electrodes. Inevitably, the electrodes and the rest of the apparatus affect the properties and particularly the spatial symmetry of the generated ultrasound. Moreover, the system essentially operates using a spark which creates a large radio frequency disturbance. Thus, this method of generating ultrasound is frequently unsuitable because a spherical sound source is required.

There is thus a need for an improved sound generation device for the measurement of room acoustics or the transfer function of a loudspeaker or microphone.

According to the invention there are provided methods according to claim 1 and 6.

The use as a sound source of a short highly energetic laser pulse gives a number of advantages. The sound pulse is very short, has high frequency components and is broadband. It is also very loud and an ideal point source. The fact that the sound is generated in the free space, typically air, and not in a loudspeaker or between electrodes, is also highly advantageous since the propagation of the generated spherical sound wave is not disturbed by any acoustically reflective surface which can falsify any measurement considerably.

The sound generated is particularly suitable for measuring the transfer function of a loudspeaker or microphone, as well as to study the motion properties of a membrane in the loudspeaker or microphone. In this context, the membrane refers to the element in the loudspeaker or microphone that interacts with sound - in the context of a loudspeaker this element is also frequently referred to as a cone.

To generate a sound beam, a parabolic sound reflector may be used with the focal spot of the lens being substantially at the focus of the parabola of the sound reflector.

In another aspect, there is provided apparatus for generating a sound impulse according to claim 12. By using a lens of relatively long focal length and low diameter, the sound can be created a significant distance away from any interfering, sound-reflecting surfaces creating a good spherical sound wave.

For a better understanding of the invention embodiments will now be described, purely by way of example, with reference to the accompanying drawings, in which:
Figure 1 illustrates a first method according to the invention;
Figure 2 illustrates the sound generated using the invention;
Figure 3 illustrates a second method according to the invention; and
Figure 4 illustrates a third method according to the invention.

The same or similar components are given the same reference numbers in the various figures and the description relating thereto is not necessarily repeated. The drawings are purely schematic and not to scale.

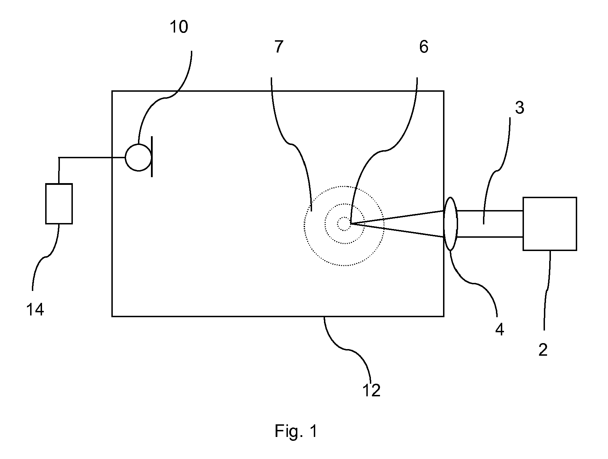

Referring to Figure 1, a method according to a first embodiment of the invention measures the impulse response of a room containing air.

The impulse response is measured using an acoustic signal generated by breaking down the air to form a plasma.

Achieving plasma breakdown of air is not trivial. A large local intensity of light is required - typically 10¹¹ Wcm⁻² . This is achieved in the arrangement of Figure 1 using a pulse laser 2 which generates laser pulse 3 with a pulse energy in the millijoule to joule range and a short pulse time in the nanosecond range. This can be achieved by Q-switched lasers, for example. In order to achieve the necessary intensity, the laser pulse is focussed by lens 4 to focal spot 6. This results in a plasma generation process, i.e. gas molecules are ionized locally. This breakdown process also leads to a shock pressure wave originating from the laser focal spot, and turning into a spherical sound pressure wave 7 after a few milliseconds.

The laser can be, for example, a 1064nm Nd:YAG laser, with active or passive q-switching. The laser can be pumped by a diode or flashlight.

Higher harmonics can also be used, for example a 532nm wavelength. The use of such higher harmonics has the advantage that the focal spot can be made still smaller.

It is worth mentioning that the efficiency of ultrasound generation is rather high. Approximately 2% of the laser energy is converted into sound. This is high for ultrasound sources in air, and comparable to conventional loudspeaker efficiencies.

For generating the best possible sound wave it is advantageous to have the sound source as far away from other components as possible. For this reason, a long focal length lens, above 250mm, for example 250mm to 1 m, preferably about 400mm to 700mm may be used. This reduces to the minimum the effects of any sound reflecting surfaces such as the lens on the sound wave, since the spot where sound is created is the focal length from the lens.

A further advantage can be achieved using lenses that are as small as possible, for the same reason. Preferably, a lens diameter below 30mm, preferably below 20mm or 15mm is used, for example a so-called "half-inch" lens.

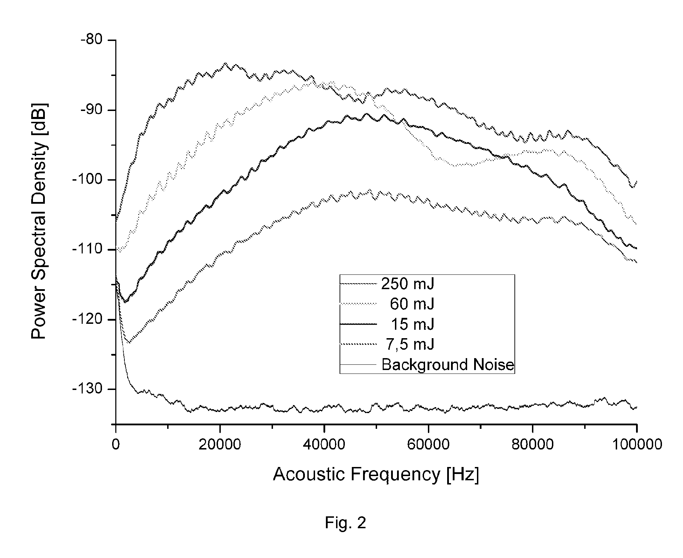

One or more microphones 10 are provided in the room 12 and feed signals to signal processor 14. This takes the signals from the microphones which gives the room impulse response. The measured impulse can be processed in the signal processor for one of a number of reasons, such as storage, calculation of reverberation time, calculation of speech transmission index, etc - such room acoustic parameters can be calculated from the impulse response. Figure 2 shows the acoustic waveform in the frequency domain for a number of laser pulse energies varying from 7.5mJ (A), through 15mJ (B), 60mJ (C) and 250mJ (D).

The pulse is very short , The laser pulse may be 1 ns long and the resulting acoustic pulse typically 0.1 ms or less.

The acoustic pulse has a broad spectrum, extending well into the ultrasound domain (100kHz), as well as down to 100Hz or less.

The pulse can also be very loud, corresponding to a sound pressure level of 134dB at 1 m. The pulse is a nearly ideal point source, generated in a volume less than 1 mm³, and is generated in the gas, not in a loudspeaker or between electrodes. This permits undisturbed spreading of the pulse.

Any surface in the vicinity of the sound source reflects the sound source and thus has a major negative effect on the sound wave. In particular, in measurement applications using prior art apparatus such as loudspeakers or spark apparatus to create sounds, the original and reflected sound waves overlap which can falsify any measurement results. This is avoided using the present invention since the lens can be small and a significant distance from the spot where sound is created, for example 500mm using a 500mm focal length lens.

Also, the pulse can be repeated often, up to 50Hz.

A further advantage is that there are fewer electromagnetic fields generated than using a spark to generate the acoustic signal, a particular problem when using the approach of US2008/0078249.

These properties mean that the pulse is very suitable for using in measuring the impulse response of a room, since the sound is an almost ideal spherical sound source which is generated directly in the air in the room.

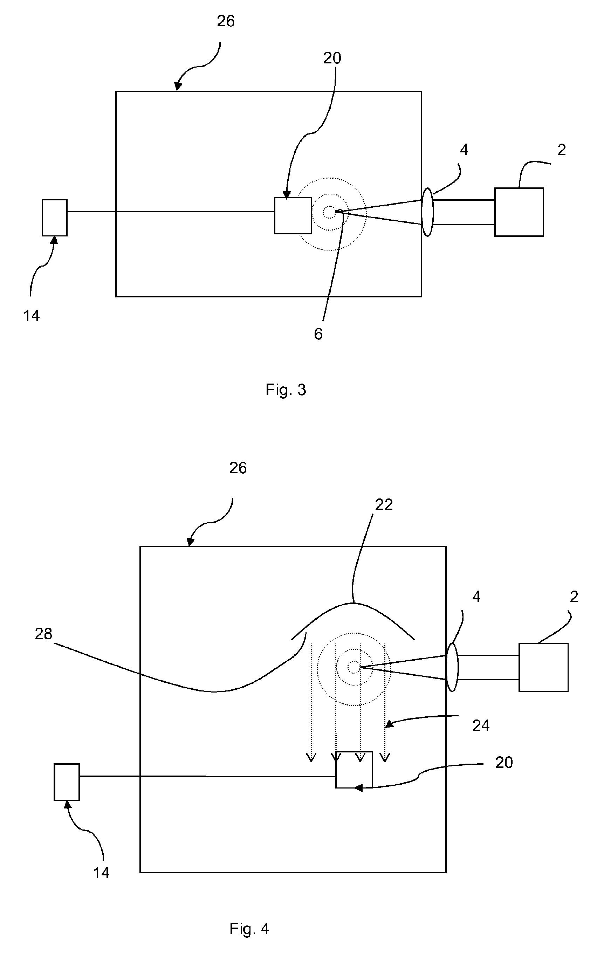

The pulse is effectively a dirac - delta function pulse which is often desired to measure the oscillations of a membrane and transfer functions of a microphone or loudspeaker. Accordingly, referring to Figure 3, the same arrangement of pulse laser 2 and lens 4 as above is used to generate an acoustic pulse adjacent to membrane 20. Typically, the membrane 20 may be the membrane of a microphone or loudspeaker. The motion of the membrane may then be studied, either optically by measuring the position of the membrane or electrically.

For example, the measurements may include measuring the motion of the membrane using lasers to detect the small motions in the membrane generated by the acoustic pulse.

However, the invention is particularly useful for the measurement of the transfer response of a microphone, in other words the electrical response of the microphone to the acoustic signal. In this case, the output of the microphone can be directly examined while the acoustic pulse is applied. Moreover, the membrane itself, isolated from the device, can be measured by connecting to an electrical transducer, typically a coil, for converting between sound and electrical energy, and the measurements made will be of the electrical response to the received acoustic signal.

The microphone may be a condensor microphone in which the electrical transducer is a condensor including the membrane and a

For the measurement of the impulse response of a microphone as the device under test, then the measurement is made in an anechoic chamber 26 and the measured signal is the impulse response of the microphone. From this measurement, the properties of the microphone can be calculated - such properties include resonance frequency, linearity and so on.

The benefit of having fewer electromagnetic fields than when using a spark source applies especially to the measurement of microphones which are typically based on a condenser formed between a metallic microphone membrane and a backplate electrode. Such microphones are very sensitive to external electromagnetic fields. Thus, for microphone measurements an acoustic reference source is preferred.

Figure 4 includes an alternative approach using a parabolic sound reflector 22, for example of plastic, with a reflecting surface 28 in the shape of a parabola. The focal spot 6 of the laser is arranged at approximately the focus of the parabola of the reflecting surface 28 of the sound reflector. This directs a more planar sound wave or sound beam 24 from the spot towards the membrane 20.

Note that although the invention as described above relates to the measurement of acoustic signals in air, the invention is equally applicable to measurement of acoustic signals in other gases such as carbon dioxide and/or at pressures other than 1 bar. The invention can also be used in liquids, such as for a sound source for underwater microphone testing and calibration, and possibly also in solids where the solid is sufficiently transparent.

The laser 2 can be either inside or outside the room. Optionally, instead of free space propagation between the laser and the lens, a fiber may be used.

## Claims

1. A method of measuring the properties of a membrane, comprising:
generating a laser pulse (3);
focussing the laser pulse onto a focal spot (6) to break down a medium at the spot to generate an acoustic pulse;
allowing the acoustic pulse (7) to excite the membrane; and
measuring at least one property of the excited membrane (20).

2. A method according to claim 1 wherein the property is the motion of the excited membrane.

3. A method according to claim 1 or 2 wherein the membrane (20) is a loudspeaker membrane or a microphone membrane and the property is the electrical signal excited by the motion of the membrane.

4. A method according to claim 3 further comprising a coil attached to the membrane to generate the electrical signal.

5. A method according to claim 3 wherein the membrane is one membrane of a condenser microphone.

6. A method of measuring the properties of a room (12), comprising:
generating a laser pulse (3);
focussing the laser pulse onto a spot (6) to break down a medium at the spot to generate an acoustic pulse in the room;
measuring the sound in at least one location in the room using a microphone (10); and
calculating at least one acoustic property of the room using the measured sound.

7. A method according to claim 6 wherein the acoustic property is the impulse response of the room.

8. A method according to any preceding claim wherein the step of focussing the laser pulse onto a focal spot uses a lens (4) having a focal length of at least 250mm and a diameter of at most 30mm.

9. A method according to any preceding claim further comprising reflecting the generated acoustic pulse in a sound reflector (22) to direct the acoustic pulse towards the membrane (20).

10. A method according to claim 9 wherein the sound reflector (22) is in the shape of a parabola having the focal spot (6) substantially at the focus of the parabola.

11. A method according to any preceding claim 1 wherein the medium is air.

12. Apparatus for generating a sound wave, comprising:
a laser (2) for generating a laser pulse (3);
a lens (4) having a focal length of at least 250mm and a diameter of at most 20mm arranged to focus the laser pulse onto a focal spot (6)to break down a medium at the focal spot to generate an acoustic pulse.

13. Apparatus according to claim 12, wherein the laser (2) is a q-switched Nd:YAG laser operating at a higher harmonic wavelength of at most 532nm.

14. Apparatus according to claim 12 or 13, further comprising a parabolic sound reflector (22) in the shape of a parabola arranged with the focal spot of the lens substantially at the focus of the parabola.
